# EUROPEAN PATENT APPLICATION

(11) **EP 4 664 904 A1**
(43) Date of publication of application: **17.12.2025**
(21) Application number: 24860522.2
(22) Date of filing: 01.08.2024
(51) Int. Cl.: H04N 21/4402, H04N 21/4363, H04N 21/43, H04N 21/462, H04N 21/8547

(54) **ELECTRONIC DEVICE AND CONTROL METHOD THEREFOR**

(30) Priority: 30.08.2023 KR 20230114940; 07.11.2023 KR 20230152836
(71) Applicant: Samsung Electronics Co., Ltd., Suwon-si, Gyeonggi-do 16677 (KR)
(72) Inventor: CHOI, Bumkwi, Suwon-si Gyeonggi-do 16677 (KR); KANG, Wooseok, Suwon-si Gyeonggi-do 16677 (KR); KIM, Doohyun, Suwon-si Gyeonggi-do 16677 (KR); KIM, Minho, Suwon-si Gyeonggi-do 16677 (KR); YOO, Kiwon, Suwon-si Gyeonggi-do 16677 (KR); JI, Kumran, Suwon-si Gyeonggi-do 16677 (KR)
(74) Representative: Appleyard Lees IP LLP
(86) International application number: PCT/KR2024/095965
(87) International publication number: WO 2025/048606

(57) **Abstract**

An electronic apparatus includes a communication interface configured to communicatively couple with a wireless network, a memory storing one or more instructions, and one or more processors communicatively coupled with the communication interface and the memory, and configured to control the electronic apparatus. The one or more processors are further configured to execute the one or more instructions to identify a frame refresh rate of a variable refresh rate (VRR) video signal, acquire a compressed video stream corresponding to the VRR video signal by inserting information of the frame refresh rate into at least one of a tail area or a header area of a video stream, and transmit, to an external device through the wireless network, the compressed video stream.

## Description

### [TECHNICAL FIELD]

The present disclosure relates generally to an electronic apparatus and a control method thereof, and more particularly, to an electronic apparatus that processes a variable refresh rate (VRR) video and a control method thereof.

### [BACKGROUND ART]

With the development of electronic technology, various types of electronic apparatuses may have been developed and their usage may have spread. For example the development and distribution of display devices such as, but not limited to, televisions (TVs), monitors, mobile devices, or the like may be actively progressing.

For example, a real-time video streaming service may be provided from a server, a game console, or the like, to a client side using variable refresh rate (VRR) video signals. At the client side, the VRR video signals may be received from a video processing device such as, but not limited to, a set-top box (STB), a one connected (OC) box, or the like, and may be transmitted to display devices such as, but not limited to, TVs and/or monitors.

### [DISCLOSURE]

### [TECHNICAL SOLUTION]

One or more example embodiments of the present disclosure provide an electronic apparatus that processes a variable refresh rate (VRR) video and a control method thereof.

According to an aspect of the present disclosure, an electronic apparatus includes a communication interface configured to communicatively couple with a wireless network, a memory storing one or more instructions, and one or more processors communicatively coupled with the communication interface and the memory, and configured to control the electronic apparatus. The one or more processors are further configured to execute the one or more instructions to identify a frame refresh rate of a variable refresh rate (VRR) video signal, acquire a compressed video stream corresponding to the VRR video signal by inserting information of the frame refresh rate into at least one of a tail area or a header area of a video stream, and transmit, to an external device through the wireless network, the compressed video stream.

According to an aspect of the present disclosure, an electronic apparatus includes a communication interface configured to communicatively couple with a wireless network, a memory storing one or more instructions, and one or more processors communicatively coupled with the communication interface and the memory, and configured to control the electronic apparatus. The one or more processors are configured to execute the one or more instructions to receive, through the communication interface, a compressed video stream corresponding to a VRR video signal, acquire frame refresh rate information included in at least one of a tail area or a header area of the compressed video stream, and generate a first sync signal corresponding to a first video frame based on the frame refresh rate information.

According to an aspect of the present disclosure, a method of controlling an electronic apparatus includes identifying a frame refresh rate of a VRR video signal, acquiring a compressed video stream corresponding to the VRR video signal by inserting information of the frame refresh rate into at least one of a tail area or a header area of a video stream, and transmitting, to an external device through a wireless network, the compressed video stream.

According to an aspect of the present disclosure, a method of controlling an electronic apparatus includes receiving, through a wireless network, a compressed video stream corresponding to a VRR video signal, acquiring frame refresh rate information included in at least one of a tail area or a header area of the compressed video stream, and generating a sync signal corresponding to a first video frame based on the frame refresh rate information.

Additional aspects may be set forth in part in the description which follows and, in part, may be apparent from the description, and/or may be learned by practice of the presented embodiments.

### [DESCRIPTION OF DRAWINGS]

The above and other aspects, features and advantages of certain embodiments of the present disclosure may be more apparent from the following description in conjunction with the accompanying drawings, in which:
FIG. 1 is a diagram depicting an implementation example of an electronic system, according to an embodiment;
FIG. 2 is a block diagram illustrating a configuration of an electronic apparatus, according to one or more embodiments;
FIG. 3 is a flowchart depicting a method of controlling an electronic apparatus, according to one or more embodiments;
FIG. 4 is a flowchart illustrating a method of controlling an electronic apparatus, according to one or more embodiments;
FIG. 5A is a block diagram depicting a configuration of an electronic apparatus, according to one or more embodiments;
FIG. 5B is a diagram illustrating a configuration of the electronic apparatus, according to one or more embodiments;
FIG. 6 is a flowchart depicting a method of controlling an electronic apparatus, according to one or more embodiments;
FIG. 7 is a flowchart illustrating a method of controlling an electronic apparatus, according to one or more embodiments;
FIG. 8 is a diagram depicting an operation between a transmitting device and a receiving device according to one or more embodiments;
FIG. 9 is a diagram illustrating a method of processing a vertical synchronization (Vsync) signal, according to one or more embodiments;
FIG. 10 is a diagram illustrating a method of processing a compressed video stream by a transmitting device, according to one or more embodiments;
FIG. 11 is a diagram illustrating a method of processing a compressed video stream by a receiving device, according to one or more embodiments;
FIG. 12 is a diagram depicting a Vsync restoration method, according to one or more embodiments;
FIG. 13A is a diagram illustrating a method of restoring a Vsync signal based on information inserted into a tail area of a stream, according to one or more embodiments; and
FIG. 13B is a diagram depicting a method of restoring a Vsync signal based on information inserted into a header area of a stream, according to one or more embodiments.

### [MODE FOR INVENTION]

After terms used in the specification are schematically described, various aspects of the present disclosure are described with reference to the accompanying drawings.

Terms used in embodiments of the present disclosure may vary depending on currently widely used practices, emergence of new technologies, or the like, as possible while taking into account the functions in the present disclosure. In addition, in a specific case, terms arbitrarily chosen by an Applicant may exist. In such a case, the meaning of such terms may be mentioned in detail in a corresponding description portion of the present disclosure. Therefore, the terms used in embodiments of the present disclosure are to be defined on the basis of the meaning of the terms and the contents throughout the present disclosure rather than simple names of the terms.

In the present disclosure, an expression "have", "may have", "include", "may include", or the like, may indicate the existence of a corresponding feature (e.g., a numerical value, a function, an operation, a component such as a part, or the like), and may not exclude existence of an additional feature.

In the present disclosure, an expression "A or B", "at least one of A and/or B", or "one or more of A and/or B", may include all possible combinations of items enumerated together. For example, "A or B", "at least one of A and B", or "at least one of A or B" may indicate all of 1) a case where only A is included, 2) a case where only B is included, or 3) a case where both of the A and B are included.

Expressions "first," "second," "1st", "2nd", or the like, used in the present disclosure may indicate various components regardless of a sequence and/or importance of the components, may be used only in order to distinguish one component from the other components, and may not limit the corresponding components.

When it is mentioned that any component (e.g., a first component) is (operatively or communicatively) coupled with/to or is connected to another component (e.g., a second component), it is to be understood that any component is directly coupled to another component or may be coupled to another component through the other component (e.g., a third component).

An expression "configured (or set) to" used in the present disclosure may be replaced by an expression "suitable for", "having the capacity to" "designed to", "adapted to", "made to", or "capable of" depending on a situation. A term "configured (or set) to" may not necessarily mean "specifically designed to" in hardware.

In some situations, an expression "a device configured to" may indicate that the device may "do" the operation together with other devices or components. For example, a "processor configured (or set) to perform A, B, and C" may refer to a dedicated processor (e.g., an embedded processor) for performing the corresponding operations or a generic-purpose processor (e.g., a central processing unit (CPU) or an application processor) that may perform the corresponding operations by executing one or more software programs stored in a memory apparatus.

Singular forms may include plural forms unless the context clearly indicates otherwise. It should be understood that terms "include" or "formed of" used in the present disclosure may specify the presence of features, numerals, steps, operations, components, parts, or combinations thereof mentioned in the present disclosure, but may not preclude the presence or addition of one or more other features, numerals, steps, operations, components, parts, or combinations thereof.

In exemplary embodiments, a 'module' or a 'unit' may perform at least one function or operation, and be implemented by hardware or software or be implemented by a combination of hardware and software. In addition, a plurality of "modules" or a plurality of "units" may be integrated in at least one module and be implemented by at least one processor except for a "module" or a "unit" that may need to be implemented by specific hardware.

Various elements and regions in the drawings are schematically illustrated. Consequently, the spirit of the present disclosure is not limited by relative sizes and/or intervals illustrated in the accompanying drawings.

Reference throughout the present disclosure to "one embodiment," "an embodiment," "an example embodiment," or similar language may indicate that a particular feature, structure, or characteristic described in connection with the indicated embodiment is included in at least one embodiment of the present solution. Thus, the phrases "in one embodiment", "in an embodiment," "in an example embodiment," and similar language throughout this disclosure may, but do not necessarily, all refer to the same embodiment. The embodiments described herein are example embodiments, and thus, the disclosure is not limited thereto and may be realized in various other forms.

It is to be understood that the specific order or hierarchy of blocks in the processes/flowcharts disclosed are an illustration of exemplary approaches. Based upon design preferences, it is understood that the specific order or hierarchy of blocks in the processes/flowcharts may be rearranged. Further, some blocks may be combined or omitted. The accompanying claims present elements of the various blocks in a sample order, and are not meant to be limited to the specific order or hierarchy presented.

The embodiments herein may be described and illustrated in terms of blocks, as shown in the drawings, which carry out a described function or functions. These blocks, which may be referred to herein as units or modules or the like, or by names such as device, logic, circuit, controller, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like.

In the present disclosure, the articles "a" and "an" are intended to include one or more items, and may be used interchangeably with "one or more." Where only one item is intended, the term "one" or similar language is used. For example, the term "a processor" may refer to either a single processor or multiple processors. When a processor is described as carrying out an operation and the processor is referred to perform an additional operation, the multiple operations may be executed by either a single processor or any one or a combination of multiple processors.

Hereinafter, various embodiments of the present disclosure are described with reference to the accompanying drawings.

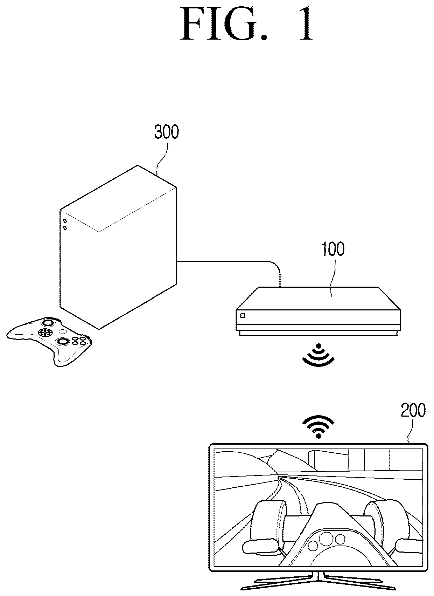

FIG. 1 is a diagram depicting an implementation example of an electronic system, according to an embodiment.

Referring to FIG. 1, an electronic system may include a transmitting device 100, a receiving device 200, and a source device 300.

The source device 300 may be and/or may include a device that may provide content and may be implemented as a server, a game console, a personal computer (PC), or the like. According to one example, the transmitting device 100 may provide a real-time video streaming service, and the real-time video streaming service may include, but not be limited, a live broadcast service, a cloud game service, a mirroring service, a video communication service, or the like.

As shown in FIG. 1, the transmitting device 100 may be implemented as a set-top box (STB) or a one connected (OC) box, however, the present disclosure is not limited thereto. For example, any device having video processing and communication functions may be applied without limitation.

As shown in FIG. 1, the receiving device 200 may be implemented as a television (TV), however, the present disclosure is not limited thereto. For example, any device having a communication function and a display function, such as, but not limited to, a monitor, a smart phone, a tablet PC, a laptop PC, a head mounted display (HMD), a near eye display (NED), a large format display (LFD), digital signage, a digital information display (DID), a video wall, a projector display, or the like, may be applied without limitation.

The receiving device 200 may receive various compressed videos and/or videos having various resolutions. For example, the receiving device 200 may receive videos in the form compressed by a moving picture experts group (MPEG) (e.g., MPEG-1 Audio Layer II (MP2), MPEG-4 Part 14 (MP4), multimedia content description interface (MP7), or the like), a joint photographic coding experts group (JPEG), advanced video coding (AVC), H.264, H.265, a high efficiency video codec (HEVC), or the like. Alternatively or additionally, the electronic apparatus 100 may receive any one of standard definition (SD), high definition (HD), full HD, ultra HD, or videos having higher resolutions.

According to one example, content provided from the source device 300 may be and/or may include a variable refresh rate (VRR) video. In such a case, the source device 300 may output a VRR video signal using a vertical synchronization (Vsync) function at a frame rate that may vary depending on a video processing speed (e.g., a video processing speed of a graphics processing unit (GPU)).

According to an example, the source device 300 and the transmitting device 100 may be connected by wired communication to perform communication. For example, the VRR video signal may be transmitted by wire from the source device 300 to the transmitting device 100. In such a case, the transmitting device 100 may receive the Vsync signal corresponding to the VRR video signal by wire from the source device 300.

According to an example, the transmitting device 100 and the receiving device 200 may perform communication through a wireless network. For example, the transmitting device 100 may compress the VRR video signal received from the source device 300, insert necessary information into a header, and transmit the necessary information to the receiving device 200 through the wireless network. In such a case, as the compressed video stream is transmitted through the wireless network, there may be a problem in that the vertical synchronization signal (Vsync signal) may not transmitted be from the transmitting device 100 to the source device 300, thereby possibly making timing synchronization difficult.

Accordingly, various embodiments that may transmit information on Vsync for timing synchronization of a transmitting end and a receiving end when transmitting the VRR video signal through the wireless network are described.

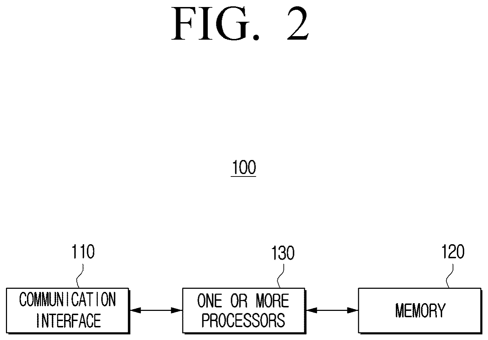

FIG. 2 is a block diagram illustrating a configuration of an electronic apparatus, according to one or more embodiments.

According to one example, the electronic apparatus 100 may be implemented as the transmitting device 100 illustrated in FIG. 1. For example, the electronic apparatus 100 may be implemented as a STB or an OC box, however, the present disclosure is not limited thereto. For example, any device with video processing and communication functions may be applied without limitation.

Referring to FIG. 2, the electronic apparatus 100 may include a communication interface 110, a memory 120, and one or more processors 130.

The communication interface 110 may be implemented as one or more of various interfaces according to the implementation example of the electronic apparatus 100. For example, the communication interface 110 may support a wireless network such as, but not limited to, Bluetooth^{™}, Zigbee, a wireless local area network (LAN) (e.g., an access point (AP)-based wireless network, Institute of Electrical and Electronics Engineers (IEEE) 802.11 (Wireless-Fidelity or Wi-Fi)), and/or a wide area network (WAN). However, the communication interface is not limited thereto, and may support wired communications such as, but not limited to, Ethernet, a high-definition multimedia interface (HDMI), a universal serial bus (USB), a mobile high-definition link (MHL), an audio engineering society/European broadcasting union (AES/EBU) interface, an optical interface, a coaxial interface, or the like. According to one example, the communication interface 110 may communicate with other electronic apparatuses, external servers, remote control devices, or the like.

The memory 120 may store data that may be needed for the implementation and/or operation of various embodiments. The memory 120 may be implemented in a form of a memory embedded in the electronic apparatus 100 and/or a form of a memory detachable from the electronic apparatus 100, depending on a data storage purpose. For example, data for driving the electronic apparatus 100 may be stored in the memory embedded in the electronic apparatus 100, and/or data for an extension function of the electronic apparatus 100 may be stored in the memory detachable from the electronic apparatus 100. In an embodiment, the memory embedded in the electronic apparatus 100 may include at least one of, for example, but not be limited to, a volatile memory (e.g., a dynamic random access memory (DRAM), a static RAM (SRAM), a synchronous DRAM (SDRAM), or the like), a non-volatile memory (e.g., a read-only memory (ROM) a one-time programmable ROM (OTPROM), a programmable ROM (PROM), an erasable and programmable ROM (EPROM), an electrically erasable and programmable ROM (EEPROM), a mask ROM, a flash ROM, or the like), a flash memory (e.g., a NAND flash, a NOR flash, or the like), a hard drive, and a solid state drive (SSD)). In addition, the memory 300 detachable from the electronic apparatus 100 may be implemented in the form of at least one of a memory card (e.g., compact flash (CF), secure digital (SD), micro secure digital (Micro-SD), mini secure digital (Mini-SD), extreme digital (xD), multi-media card (MMC), or the like), external memory (e.g., USB memory) connectable to a USB port, or the like.

One or more processors 130 may control the overall operation of the electronic apparatus 100. For example, one or more processors 130 may be connected to each component of the electronic apparatus 100 and may generally control the operation of the electronic apparatus 100. As another example, one or more processors 130 may be electrically connected to the display 240 and the memory 120 to control the overall operations of the electronic device 100. The processor 130 may be composed of one or more processors.

One or more processors 130 may perform the operation of the electronic apparatus 100 according to various embodiments by executing at least one instruction stored in the memory 120.

One or more processors 130 may include one or more of a central processing unit (CPU), a GPU, an accelerated processing unit (APU), a many integrated core (MIC), a digital signal processor (DSP), a neural processing unit (NPU), a hardware accelerator, a machine learning accelerator, or the like. One or more processors 130 may control one or any combination of other components of the electronic apparatus and may perform operations related to communication or data processing. One or more processors 130 may execute one or more programs or instructions stored in the memory. For example, one or more processors may perform the method according to one or more embodiments of the present disclosure by executing one or more instructions stored in the memory 120.

When the method according to one or more embodiments of the present disclosure includes a plurality of operations, the plurality of operations may be performed by one processor or by a plurality of processors. For example, when a first operation, a second operation, and a third operation are performed by the method according to one or more embodiments, the first operation, the second operation, and the third operation may all be performed by a first processor, the first operation and the second operation may be performed by the first processor (e.g., a general-purpose processor), and the third operation may be performed by a second processor (e.g., an artificial intelligence-specific processor).

The one or more processors 130 may be implemented as a single core processor including one core, and/or one or more multicore processors including a plurality of cores (e.g., homogeneous multicore or heterogeneous multicore). When one or more processors 130 are implemented as a multicore processor, each of the plurality of cores included in the multicore processor may include an internal memory of the processor such as, but not limited to, a cache memory and an on-chip memory, and a common cache shared by a plurality of cores may be included in a multicore processor. In addition, each of the plurality of cores (or some of the plurality of cores) included in the multi-core processor may read and perform program instructions for independently implementing the method according to one or more embodiments of the present disclosure, and all (or part) of the plurality of cores may be linked to read and perform program instructions for implementing the method according to one or more embodiments of the present disclosure.

When the method according to one or more embodiments of the present disclosure includes a plurality of operations, the plurality of operations may be performed by one of a plurality of cores included in a multicore processor, or may be performed by the plurality of cores. For example, when the first operation, the second operation, and the third operation are performed by the method according to one or more embodiments, the first operation, the second operation, and the third operation may all be performed by the first processor in the multicore processor, the first operation and the second operation may be performed by a first core included in the multicore processor, and the third operation may be performed by a second core included in the multicore processor.

In an embodiment of the present disclosure, the processor may be a system-on-chip (SoC) in which one or more processors and other electronic components are integrated, a single-core processor, a multi-core processor, or a core included in the single-core processor or the multi-core processor. Here, the core may be implemented as CPU, GPU, APU, MIC, DSP, NPU, a hardware accelerator, a machine learning accelerator, or the like, but embodiments of the present disclosure are not limited thereto. Hereinafter, for convenience of description, one or more processors 130 may be referred to as the processor 130.

According to an embodiment, the processor 130 may identify the frame refresh rate of the VRR video signal. For example, the VRR video signal may be the video signal transmitted from the source device 300 as shown in FIG. 1. For example, when the source device 300 and the electronic apparatus 100 are connected by wire, a sync signal (e.g., a Vsync signal) may be received from the source device 300 to identify the frame refresh rate. As used herein, the frame refresh rate may refer to a monitor refresh rate and may also be referred to as vertical frequency and/or a screen refresh rate. The unit of the refresh rate may be expressed as Hertz (Hz), and the Hertz value may indicate how many screens (e.g., frames) may be displayed per second. A frame rate of the GPU may be referred to as a refresh rate and/or a screen refresh rate. The unit of the frame rate may be expressed in frames per second (FPS), and the FPS may indicate how many frames (e.g., screens) are generated per second.

As used herein, the VRR video signal may be a video signal whose frame rate varies depending on the video processing speed in the GPU, and the processor 130 may identify the frame refresh rate of the VRR video signal using the Vsync function.

The processor 130 may insert information on the identified frame refresh rate into at least one of a tail area or a header area of the video stream to acquire a compressed video stream corresponding to the VRR video signal. For example, the processor 130 may generate the compressed video stream corresponding to the VRR video signal based on compression methods such as, but not limited to, MPEG (e.g., MP2, MP4, MP7, or the like), JPEG, AVC), H.264, H.265, HEVC, or the like.

The processor 130 may generate a compressed packet corresponding to each video frame that may include video information corresponding to each video frame in headers of each compressed packet. For example, the video information may include information such as, but not limited to, a video size, a compression rate, or the like.

Alternatively or additionally, the processor 130 may include the VRR information in the header or tail area of the compressed packet. For example, the VRR information may be frame refresh rate information. For example, the frame refresh rate information may indicate an interval between the Vsync signals, among other information.

According to one example, the processor 130 may insert frame refresh rate information of a first video frame into a tail area of a first compressed video packet corresponding to the first video frame. For example, the processor 130 may insert interval information between a first Vsync signal corresponding to the first video frame and a second Vsync signal corresponding to the second video frame which is the next video frame into the tail area of the first compressed video packet corresponding to the first video frame.

Alternatively or additionally, the processor 130 may insert the frame refresh rate information of the first video frame into a header area of a second compressed video packet corresponding to a second video frame which is a next frame of the first video frame. For example, the processor 130 may insert interval information between a first Vsync signal corresponding to the first video frame and a second Vsync signal corresponding to the second video frame which is the next video frame into the header area of the second compressed video packet.

For example, the processor 130 may operate a clock counter based on the Vsync signal of the first video frame included in the VRR video signal. Additionally, the processor 130 may identify the frame refresh rate of the first video frame based on the counting value of the clock counter. In an embodiment, the processor 130 may insert the frame refresh rate information of the first video frame into the tail area of the first compressed video packet, or insert the frame refresh rate information of the first video frame into the header area of the second compressed video packet.

The processor 130 may control the communication interface 110 to transmit the acquired compressed video stream to the external device through the wireless network.

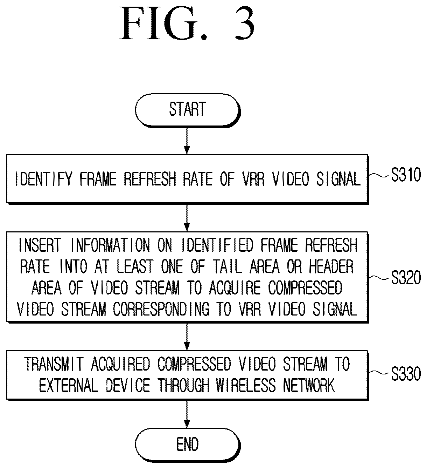

FIG. 3 is a flowchart depicting the method of controlling an electronic apparatus, according to one or more embodiments.

Referring to FIG. 3, the electronic apparatus 100 may identify the frame refresh rate of the VRR video signal (operation S310). For example, the VRR video signal may be and/or may include the video signal transmitted from the source device 300 to the electronic apparatus 100. For example, when the source device 300 and the electronic apparatus 100 are connected by wire, a sync signal (e.g., a Vsync signal) may be received from the source device 300 by the electronic apparatus 100 to identify the frame refresh rate. The Vsync signal may be and/or may include a signal used to match a start point of scanning one field on the transmitting and receiving sides, and may transmit a pulse signal of opposite polarity to the video signal in a vertical erase section of the video signal.

The electronic apparatus 100 may insert information on the identified frame refresh rate into at least one of a tail area or a header area of the video stream to acquire a compressed video stream corresponding to the VRR video signal (operation S320).

The electronic apparatus 100 may transmit the acquired compressed video stream to the external device through the wireless network (operation S330).

As shown in FIG. 3, the order of all operations is mapped for convenience of description, however, the order of operations that are unrelated to the order or may be performed in parallel is not necessarily limited to that order.

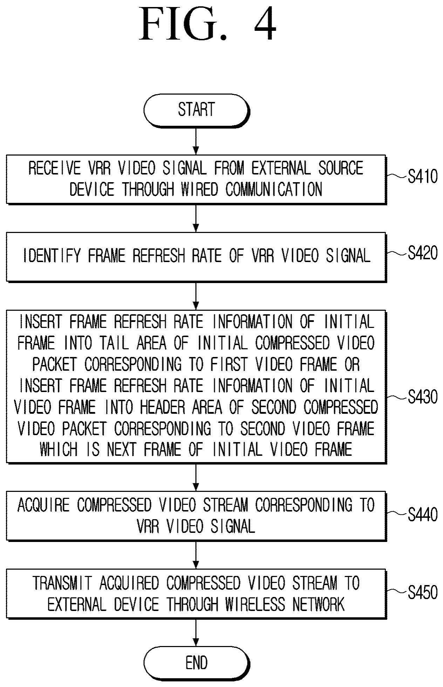

FIG. 4 is a flowchart illustrating a method of controlling an electronic apparatus, according to one or more embodiments.

Referring to FIG. 4, the electronic apparatus 100 may receive the VRR video signal from the external source device through the wired communication (operation S410). However, in some embodiments, the electronic apparatus 100 may receive the VRR video signal from the external source through the wireless communication.

The electronic apparatus 100 may identify the frame refresh rate of the VRR video signal (operation S420). For example, when receiving the VRR video signal from the external source device through the wired communication, the Vsync signal for each frame included in the VRR video signal may be received together.

The electronic apparatus 100 may insert the frame refresh rate information of the first frame into the tail area of the first compressed video packet corresponding to the first video frame, or insert the frame refresh rate information of the first video frame in the header area of the second compressed video packet corresponding to the second video frame which is the next frame of the first video frame (operation S430).

The electronic apparatus 100 may acquire the compressed video stream corresponding to the VRR video signal (operation S440).

The electronic apparatus 100 may transmit the acquired compressed video stream to the external device through the wireless network (operation S450).

As shown in FIG. 4, the order of all operations is mapped for convenience of description, however, the order of operations that are unrelated to the order or may be performed in parallel is not necessarily limited to that order.

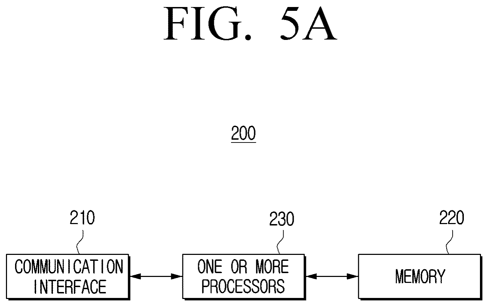

FIG. 5A is a block diagram depicting a configuration of an electronic apparatus, according to one or more embodiments.

According to one example, the electronic apparatus 200 may be implemented as the receiving device 200 illustrated in FIG. 1. For example, the electronic apparatus 200 may be implemented as a TV, however, the present disclosure is not limited thereto, and any device having a communication function and a display function, such as, but not limited to, a monitor, a smart phone, a tablet PC, a laptop PC, an HMD, a NED, an LFD, digital signage, a DID, a video wall, a projector display, or the like, may be applied without limitation.

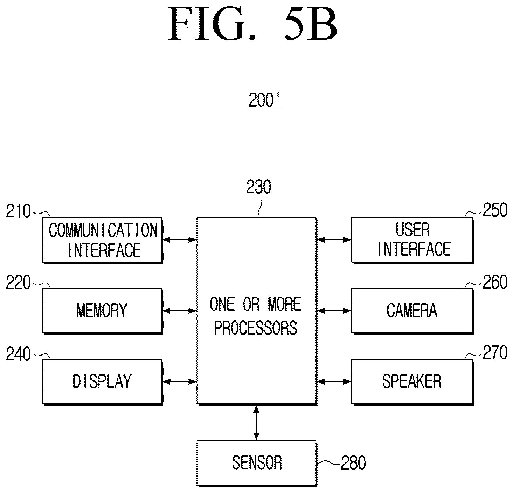

Referring to FIG. 5, the electronic apparatus 200 may include a communication interface 210, a memory 220, and one or more processors 230. An implementation example of the communication interface 210, the memory 220, and one or more processors 230 may include and/or may be similar in many respects to the communication interface 110, the memory 120, and one or more processors 130 illustrated in FIG. 2, and may include additional features not mentioned above. Consequently, repeated descriptions of the electronic apparatus 200 and its components described above with reference to FIG. 2 may be omitted for the sake of brevity.

According to an embodiment, when the compressed video stream corresponding to the VRR video signal is received through the communication interface 210, the processor 230 may acquire the frame refresh rate information included in at least one of the tail area or the header area of the compressed video stream.

The processor 230 may generate a sync signal corresponding to the video frame based on the acquired frame refresh rate information.

According to an example, when the compressed video stream is received, the processor 230 may generate an initial sync signal and operate the clock counter. The clock counter may be and/or may include an element (or device) that counts the number of clock pulses while cycling through a predetermined state transition sequence. Operating the clock counter may refer to an operation of resetting the clock counter to start counting, and the number of clock pulses may be counted according to the upward counting method. For example, the clock counter may be and/or may include any one of a binary counter, a ring counter, a Johnson counter, and a gray code counter, which are classified according to a type of output code.

According to an example, when the frame refresh rate information of the first video frame included in the tail area of the compressed video stream is acquired, the processor 230 may generate the sync signal corresponding to the second video frame, which is the next frame of the first video frame, based on the counting value of the clock counter and the frame refresh rate information of the first video frame.

For example, the processor 230 may acquire the frame refresh rate information included in the tail area of each of the plurality of compressed video packets included in the compressed video stream. In such an embodiment, the tail area of each of the plurality of compressed video packets may include the frame refresh rate information of the video frame corresponding to each of the plurality of compressed video packets.

According to an example, when the frame refresh rate information of the first video frame included in the header area of the compressed video stream is acquired, the processor 230 may generate the sync signal corresponding to the first video frame based on the counting value of the clock counter and the frame refresh rate information of the first video frame.

For example, the processor 230 may acquire the frame refresh rate information included in the header area of each of the plurality of compressed video packets included in the compressed video stream. In such an example, the header area of each of the plurality of compressed video packets may include frame refresh rate information of a previous frame of the video frame corresponding to each of the plurality of compressed video packets.

FIG. 5B is a diagram illustrating a configuration of the electronic apparatus, according to one or more embodiments.

Referring to FIG. 5B, an electronic apparatus 200' may include a communication interface 210, a memory 220, one or more processors 230, a display 240, a user interface 250, a camera 260, a speaker 270, and a sensor 280. A detailed description for components overlapped with components illustrated in FIG. 5A among components illustrated in FIG. 5B may be omitted for the sake of brevity.

The display 240 may be implemented as a display including a self-light emitting element and/or a display including a non-light emitting element and a backlight. For example, the display 240 may be implemented as various types of displays such as, but not limited to, a liquid crystal display (LCD), an organic light emitting diodes (OLED) display, light emitting diodes (LED), a micro LED, a Mini LED, a plasma display panel (PD), a quantum dot (QD) display, and quantum dot light-emitting diodes (QLED). A driving circuit, a backlight unit, and the like, that may be implemented in the form such as, but not limited to, an amorphous silicon (a-Si) thin film transistor (TFT), a low temperature poly silicon (LTPS), a TFT, an organic TFT (OTFT), and the like, may be included in the display 240. According to an example, a touch sensor that detects a touch operation in the form of a touch film, a touch sheet, a touch pad, or the like may be arranged on a front surface of the display 240 and may be implemented to detect various types of touch input. For example, the display 240 may detect various types of touch inputs, such as, but not limited to, a touch input by a user's hand, a touch input by an input device such as a stylus pen, or a touch input by a specific electrostatic material. As used herein, the input device may be implemented as a pen-type input device that may be referred to by various terms such as an electronic pen, a stylus pen, and an S-pen. According to an example, the display 240 may be implemented as a flat display, a curved display, a flexible display capable of folding and/or rolling, or the like. According to an example, the processor 230 may display the acquired output video through the display 240.

According to an example, the processor 230 may control the display 240 to output the video frame based on the video signal restored from the compressed video stream and the sync signal corresponding to the video frame. For example, the processor 230 may generate the Vsync signal based on the identified frame refresh rate and output the video frame based on the generated Vsync signal.

The user interface 250 may be implemented as a device such as, but not limited to, a button, a touch pad, a mouse, and a keyboard or may be implemented as a touch screen, or the like, that may perform both of the abovementioned display function and manipulation input function.

The camera 260 may be turned on and may perform capturing according to a preset event. The camera 260 may convert the captured video into an electrical signal and generate video data based on the converted signal. For example, a subject may be transformed into an electrical video signal through a semiconductor optical device (e.g., charge coupled device (CCD)), and the transformed video signal may be amplified and transformed into a digital signal and then processed. For example, the camera 260 may be implemented as a general camera, a stereo camera, a depth camera, or the like.

The speaker 270 may be and/or may include a component for outputting various notification sounds, a voice message, or the like, as well as, various audio data. The processor 230 may control the speaker 270 to output feedback or various notifications in the audio form according to various embodiments of the present disclosure.

The sensor 280 may be and/or may include various types of sensors, such as, but not limited to, a touch sensor, a proximity sensor, an acceleration sensor (or gravity sensor), a geomagnetic sensor, a gyro sensor, a pressure sensor, a position sensor, a distance sensor, and an illuminance sensor.

The electronic apparatus 200' may not be limited to the components illustrated in FIG. 5B and may include additional components, such as, but not limited to, a microphone, a tuner, a demodulator, or the like according to the implementation example and/or design constraints.

For example, the microphone may be and/or may include a component for receiving a user' voice and/or other sounds and converting the user's voice and/or other sounds into audio data. However, according to another embodiment, the electronic apparatus 200' may receive a user's voice input through an external device through the communication interface 210.

As another example, the tuner may tune a channel selected by the user from among radio frequency (RF) broadcasting signals received through an antenna or all pre-stored channels to receive an RF broadcasting signal.

As another example, the demodulator may receive and demodulate a digital intermediate frequency (DIF) signal converted by the tuner and perform channel demodulation, or the like.

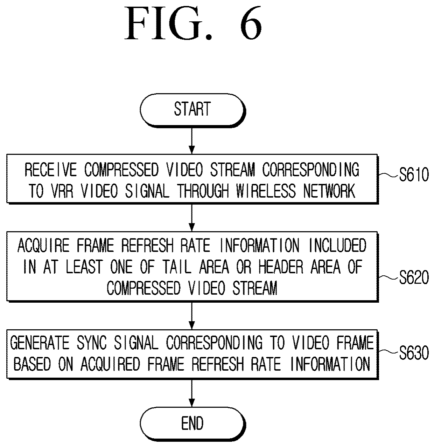

FIG. 6 is a flowchart depicting a method of controlling an electronic apparatus, according to one or more embodiments.

Referring to FIG. 6, the electronic apparatus 200 may receive the compressed video stream corresponding to the VRR video signal through the wireless network (operation S610). For example, the electronic apparatus 200 may receive the compressed video stream from the electronic apparatus 100, for example, the transmitting device 100 of FIG. 1.

The electronic apparatus 200 may acquire the frame refresh rate information included in at least one of the tail area or the header area of the compressed video stream (operation S620). For example, the electronic apparatus 200 may acquire a plurality of compressed video packets from the compressed video stream and acquire the frame refresh rate information included in at least one of the tail area or the header area of each of the plurality of compressed video packets.

The electronic apparatus 200 may generate a sync signal corresponding to the video frame based on the acquired frame refresh rate information (operation S630). For example, the electronic apparatus 200 may generate the next Vsync signal based on the frame refresh rate.

As shown in FIG. 6, the order of all operations is mapped for convenience of description, however, the order of operations that are unrelated to the order or may be performed in parallel is not necessarily limited to that order.

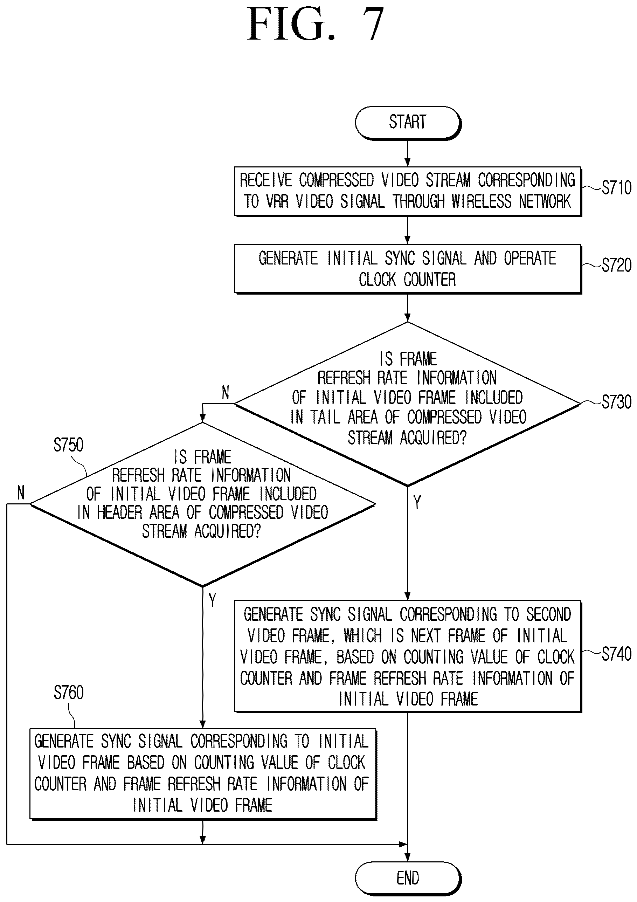

FIG. 7 is a flowchart illustrating a method of controlling an electronic apparatus, according to one or more embodiments.

Referring to FIG. 7, the electronic apparatus 200 may receive the compressed video stream corresponding to the VRR video signal through the wireless network (operation S710).

The electronic apparatus 200 may generate the initial sync signal and operate the clock counter (operation S720).

When the frame refresh rate information of the first video frame included in the tail area of the compressed video stream is acquired (Y in operation S730), the electronic apparatus 200 may generate the sync signal corresponding to the second video frame, which is the next frame of the first video frame, based on the counting value of the clock counter and the frame refresh rate information of the first video frame (operation S740).

For example, the electronic apparatus 200 may acquire the frame refresh rate information included in the tail area of each of the plurality of compressed video packets included in the compressed video stream. As another example, the tail area of each of the plurality of compressed video packets may include the frame refresh rate information of the video frame corresponding to each of the plurality of compressed video packets.

Alternatively or additionally, when the frame refresh rate information of the first video frame included in the header area of the compressed video stream is acquired (Y in operation S750), the electronic apparatus 200 may generate the sync signal corresponding to the first video frame based on the counting value of the clock counter and the frame refresh rate information of the first video frame (operation S760).

For example, the electronic apparatus 200 may acquire the frame refresh rate information included in the header area of each of the plurality of compressed video packets included in the compressed video stream. As another example, the header area of each of the plurality of compressed video packets may include frame refresh rate information of a previous frame of the video frame corresponding to each of the plurality of compressed video packets.

As shown in FIG. 7, the order of all operations is mapped for convenience of description, however, the order of operations that are unrelated to the order or may be performed in parallel is not necessarily limited to that order.

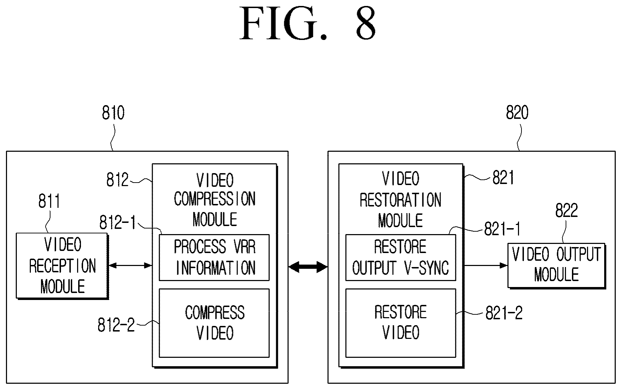

FIG. 8 is a diagram depicting an operation between a transmitting device and a receiving device, according to one or more embodiments.

Referring to FIG. 8, a transmitting device 810 and a receiving device 820 may perform communication through a wireless network. According to an example, the transmitting device 810 may include and/or may be similar in many respects to the electronic apparatus 100 illustrated in FIG. 2, and the receiving device 820 may include and/or may be similar in many respects to the electronic apparatus 200 and 200' illustrated in FIGS. 5A and 5B.

According to an example, the transmitting device 810 may include a video reception module 811 and a video compression module 812. Each module may be implemented with at least one software, at least one hardware, and/or a combination thereof. For example, at least one of the video reception module 811 and the video compression module 812 may be implemented to use a predefined algorithm, a predefined formula, and/or a trained artificial intelligence model. The video reception module 811 and the video compression module 812 may be included in the electronic apparatus 100, but according to an example, may be distributed to at least one external device.

According to an example, the transmitting device 810 may receive the video signal from the source device 300 using the video reception module 811. For example, the transmitting device 810 may receive the VRR video signal from the source device 300 by wire. In such an example, the transmitting device 810 may receive the Vsync corresponding to the VRR video signal from the source device 300 by wire.

According to an example, the transmitting device 810 may compress the received video signal using the video compression module 812. For example, the transmitting device 810 may process the VRR information acquired based on the VRR video signal received from the source device 300 (operation 812-1), and compress the video by inserting the video information and the VRR information (operation 812-2) to generate the compressed video stream. For example, the video information may include information such as, but not limited to, a video size and a compression rate. As another example, the VRR information may include the interval information between the Vsync. As another example, the transmitting device 810 may compress the video using standard codecs such as H.264/265, VP8/9, and AV1

Thereafter, the transmitting device 810 may transmit the compressed video stream to the receiving device 820 through the wireless network.

According to one example, the receiving device 820 may include a video restoration module 821 and a video output module 822. Each module may be implemented with at least one software, at least one hardware, and/or a combination thereof. For example, at least one of the video restoration module 821 and the output module 822 may be implemented to use a predefined algorithm, a predefined formula, and/or a trained artificial intelligence model. The video restoration module 821 and the video output module 822 may be included in the electronic apparatus 100, but according to an example, may be distributed to at least one external device.

According to one example, the receiving device 820 may restore (or decode) the compressed video stream received from the transmitting device 810 using the video restoration module 821. For example, the receiving device 820 may restore the Vsync signal and video from the compressed video stream using the image restoration module 821. For example, the receiving device 820 may restore the Vsync signal based on the VRR information included in at least one of the header area or the tail area of the compressed video stream (operation 821-1). As another example, the receiving device 820 may restore a video based on the video information included in the header area of the compressed video stream (operation 821-2).

For example, the receiving device 820 may store the compressed video stream transmitted in real time from the transmitting device 810 in a stream buffer (or receiving buffer), and restore the compressed video stream using the video restoration module 821. As another example, the video restoration module 821 may be implemented as a decoder, and the decoder may be implemented as a type of digital signal processor (DSP).

According to one example, the receiving device 820 may output the restored image based on the Vsync signal using the video output module 822. For example, the receiving device 820 may acquire the Vsync signal corresponding to each frame based on the VRR information included in each compressed video packet included in the compressed video stream, and output the VRR frame based on the acquired Vsync signal.

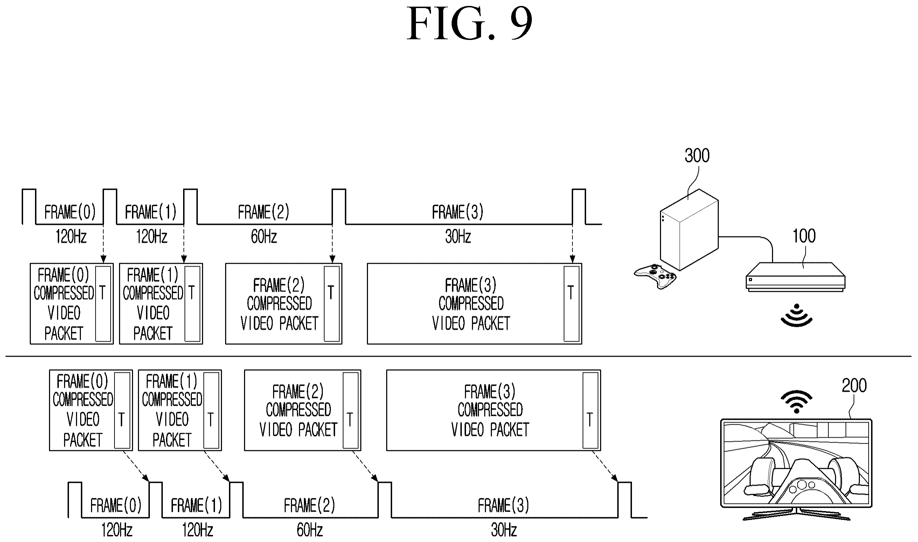

FIG. 9 is a diagram illustrating a method of processing a Vsync signal, according to one or more embodiments.

Referring to FIG. 9, the electronic apparatus 100 may generate the compressed video stream based on the VRR video stream received from the source device 300, and transmit the generated compressed video stream to the electronic apparatus 200. Hereinafter, for convenience of description, the electronic apparatus 100 may be referred to as the transmitting device 100, and the electronic apparatus 200 may be referred to as the receiving device 200.

The transmitting device 100 may acquire the VRR information based on the Vsync signal corresponding to each frame included in the VRR video stream received from the source device 300 and generate the compressed video stream based on the VRR information and the video information. For example, the VRR information may include the frame refresh rate information. The frame refresh rate information may be and/or may include an interval between the Vsync signals. For example, the video information may include information such as a video size and a compression rate.

According to one example, the transmitting device 100 may generate the compressed video stream by inserting the VRR information into the compressed video packet corresponding to each video frame. For example, the transmitting device 100 may insert the VRR information into the header area or tail area of each compressed video packet. However, in FIG. 9, for convenience of description, it may be assumed that the VRR information is inserted into the tail area of each compressed video packet.

Referring to FIG. 9, the transmitting device 100 may insert frame refresh rate information (e.g., 120 Hz) of a first frame Frame(0) into a tail area of a first frame Frame(0) compressed video packet corresponding to the first frame Frame(0). For example, the transmitting device 100 may insert interval information between a first Vsync signal corresponding to the first frame Frame(0) and a second Vsync signal corresponding to a second frame Frame(1) which is the next video frame into the tail area of the first frame Frame(0) compressed video packet corresponding to the first frame Frame(0). In addition, the transmitting device 100 may insert frame refresh rate information (e.g., 120 Hz) of the second frame Frame(1) into a tail area of the second frame Frame(1) compressed video packet corresponding to the second frame Frame(1). For example, the transmitting device 100 may insert interval information between a second Vsync signal corresponding to the second frame Frame(1) and a third Vsync signal corresponding to a third frame Frame(2) which is the next video frame into the tail area of the second frame Frame(1) compressed video packet corresponding to the second frame Frame(1). In addition, the transmitting device 100 may insert frame refresh rate information (e.g., 60 Hz) of third frame Frame(2) into a tail area of a third frame Frame(2) compressed video packet corresponding to third frame Frame(2). For example, the transmitting device 100 may insert interval information between a third Vsync signal corresponding to third frame Frame(2) and a fourth Vsync signal corresponding to a fourth frame Frame(3) which is the next video frame into the tail area of the third frame Frame(2) compressed video packet corresponding to the third frame Frame(2).

When the compressed video stream is received from the transmitting device 100, the receiving device 200 may restore the Vsync signal based on the VRR information included in the compressed video stream and output the VRR video frame based on the Vsync signal.

According to one example, the receiving device 200 may acquire the VRR information inserted into the tail area of each compressed video packet and restore the Vsync signal corresponding to each video frame based on the acquired VRR information. In addition, the receiving device 200 may output each video frame based on the Vsync signal corresponding to each video frame.

Referring to FIG. 9, the receiving device 200 may acquire the frame refresh rate information (e.g., 120 Hz) of the first frame Frame(0) included in the tail area of the first frame Frame(0) compressed video packet corresponding to the first frame Frame(0). In such an embodiment, the receiving device 200 may generate the second Vsync signal of the second frame Frame(1), which is the next video frame, based on the frame refresh rate information (e.g., 120 Hz) of the first frame Frame(0) and output the second frame Frame(1). For example, the receiving device 200 may randomly output the first Vsync signal, which is the initial Vsync signal, and then count the time corresponding to 120 Hz from the time when the first Vsync signal is output to identify the time when the second Vsync signal corresponding to the second frame Frame(1) is output.

The receiving device 200 may acquire the frame refresh rate information (e.g., 120 Hz) of the second frame Frame(1) included in the tail area of the second frame Frame(1) compressed video packet corresponding to the second frame Frame(1). In this case, the receiving device 200 may generate the third Vsync signal corresponding to the third frame Frame(2), which is the next video frame, based on the frame refresh rate information (e.g., 120 Hz) of the second frame Frame(1) and output the third frame Frame(2). For example, the receiving device 200 may count the time corresponding to 120 Hz from the time when the second Vsync signal corresponding to the Frame (1) is output to identify the time when the third Vsync signal corresponding to the Frame (2) is output.

The receiving device 200 may acquire the frame refresh rate information (e.g., 60 Hz) of the third frame Frame(2) included in the tail area of the third frame Frame(2) compressed video packet corresponding to the third frame Frame(2). In such an embodiment, the receiving device 200 may generate a fourth Vsync signal corresponding to the fourth frame Frame(3), which is the next video frame, based on the frame refresh rate information (e.g., 60 Hz) of third frame Frame(2) and output the fourth frame Frame(3). For example, the receiving device 200 may count the time corresponding to 60 Hz from the time when the third Vsync signal corresponding to the Frame (2) is output to identify the time when the fourth Vsync signal corresponding to the Frame (3) is output.

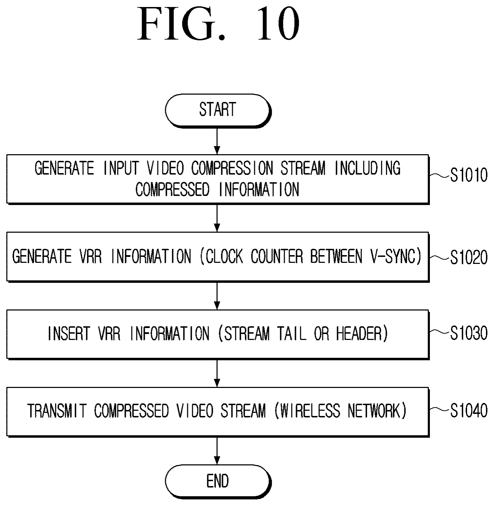

FIG. 10 is a diagram illustrating a method of processing a compressed video stream by a transmitting device, according to one or more embodiments.

Referring to FIG. 10, the transmitting device 100 may generate the compressed video stream including the compressed information based on the video signal received from the source device 300 (operation S1010). For example, the transmitting device 100 may receive the video signal from the source device 300 by wire. For example, the compression information may include video information such as a video size and a compression rate.

The transmitting device 100 may generate the VRR information corresponding to the compressed video stream (operation S1020). For example, the transmitting device 100 may generate the VRR information based on the Vsync signal included in the input video signal. As another example, the VRR information may include the frame refresh rate information. As another example, the transmitting device 100 may obtain the frame refresh rate information corresponding to each frame by counting the interval between the Vsync signals received from the transmitting device 300.

For example, the transmitting device 100 may operate the clock counter based on the first Vsync signal included in the VRR video signal and acquire the first frame refresh rate information corresponding to the first video frame based on the counted value until the second Vsync signal is received. As another example, when the value counted from the time when the first Vsync signal is received until the time when the second Vsync signal is received is 1/120 seconds (e.g., approximately 8.33 milliseconds), the first frame refresh rate information of 120 Hz may be acquired. When the second Vsync signal is received, the transmitting device 100 may reset and initialize the clock counter and may acquire the second frame refresh rate information corresponding to the second video frame based on the value counted until the third Vsync signal is received. For example, when the value counted from the time when the second Vsync signal is received until the third Vsync signal is received is 1/120 seconds, the second frame refresh rate information of 120 Hz may be acquired. When the third Vsync signal is received, the transmitting device 100 may reset and initialize the clock counter and may acquire the third frame refresh rate information corresponding to the third video frame based on the value counted until the fourth Vsync signal is received. For example, when the value counted from the time when the third Vsync signal is received until the fourth Vsync signal is received is 1/60 seconds, the third frame refresh rate information of 60 Hz may be acquired.

The transmitting device 100 may insert the VRR information into the compressed video stream (operation S1030). For example, the transmitting device 100 may insert the first frame refresh rate information corresponding to the first video frame into the tail area of the first video compressed packet corresponding to the first video frame. In addition, the transmitting device 100 may insert the second frame refresh rate information corresponding to the second video frame into the tail area of the second video compressed packet corresponding to the second video frame. The transmitting device 100 may insert the third frame refresh rate information corresponding to the third video frame into the tail area of the third video compressed packet corresponding to the third video frame.

The transmitting device 100 may transmit the compressed video stream to the receiving device 200 through the wireless network. For example, the transmitting device 100 may transmit a compressed video stream including a first compressed video packet, a second compressed video packet, a third compressed video packet, ... , to an n-th compressed video packet to the receiving device 200 through a wireless network.

As shown in FIG. 10, the order of all operations is mapped for convenience of description, however, the order of operations that are unrelated to the order or may be performed in parallel is not necessarily limited to that order.

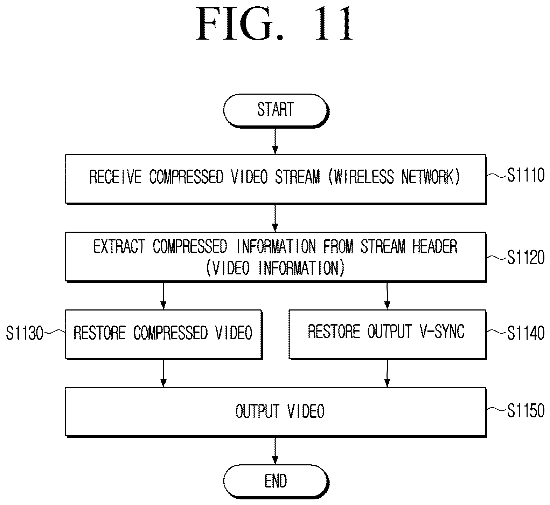

FIG. 11 is a diagram illustrating a method of processing a compressed video stream of a receiving device according to one or more embodiments.

Referring to FIG. 11, the receiving device 200 may receive the compressed video stream from the transmitting device 100 through the wireless network (operation S1110). For example, the compressed video stream may include a plurality of compressed video packets compressed on a frame-by-frame basis.

The receiving device 200 may extract the compression information and the VRR information from the stream header (operation S1120). For example, the compression information may include video information such as, but not limited to, a video size and a compression rate. For example, the VRR information may include the frame refresh rate information. According to one example, the compression information may be included in the header area of each compressed video packet. For example, the VRR information may be included in the header area or the tail area of each compressed video packet.

The receiving device 200 may restore the compressed image based on the compressed information (operation S1130) and restore the output Vsync signal based on the VRR information (operation S1140). For example, the receiving device 200 may decode the compressed video packet based on the video information such as, but not limited to, the video size and the compression rate. As another example, the receiving device 200 may restore the output Vsync signal based on the frame refresh rate information, for example, the interval information between the Vsync signals.

For example, the receiving device 200 may randomly output the first Vsync signal and operate the clock counter. When the first frame refresh rate information included in the first compressed video packet is acquired while the counting by the clock counter is maintained, the receiving device 200 may output the second Vsync signal based on the first frame refresh rate information. For example, when the first frame refresh rate information is 120 Hz, the second Vsync signal may be output at the time when the clock counting value becomes 1/120 seconds. The receiving device 200 may be initialized by resetting the clock counter at the time when the second Vsync signal is output. When the second frame refresh rate information included in the second compressed video packet is acquired while the counting by the clock counter is maintained, the receiving device 200 may output the third Vsync signal based on the second frame refresh rate information. For example, when the third frame refresh rate information is 120 Hz, the third Vsync signal may be output at the time when the clock counting value becomes 1/120 seconds. The receiving device 200 may be initialized by resetting the clock counter at the time when the third Vsync signal is output. When the third frame refresh rate information included in the third compressed video packet is acquired while the counting by the clock counter is maintained, the receiving device 200 may output the fourth Vsync signal based on the second frame refresh rate information. For example, when the third frame refresh rate information is 60 Hz, the fourth Vsync signal may be output at the time when the clock counting value becomes 1/60 seconds.

The receiving device 200 may output the restored compressed image based on the output Vsync signal (operation S1150). For example, the receiving device 200 may output a decoded video stream in synchronization with the output Vsync signal.

As shown in FIG. 11, the order of all operations is mapped for convenience of description, however, the order of operations that are unrelated to the order or may be performed in parallel is not necessarily limited to that order.

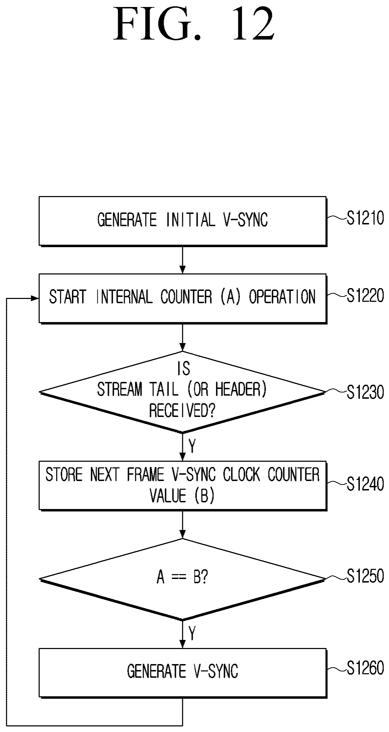

FIG. 12 is a diagram depicting a Vsync restoration method, according to one or more embodiments.

Referring to FIG. 12, when the compressed video stream is received from the transmitting device 100, the receiving device 200 may generate the initial Vsync signal based on the reception time (operation S1210). For example, the receiving device 200 may generate the first Vsync signal within a threshold time from the time when the compressed video stream is received. As another example, when specific content is selected according to a user command and the compressed video stream corresponding to the selected content is received, the receiving device 200 may generate the initial Vsync signal within the threshold time from the reception time.

The receiving device 200 may operate the internal counter and increase the clock counter value A (operation S1220). For example, the receiving device 200 may start the counting by operating the clock counter at the time the initial Vsync signal is generated and output. In addition, the receiving device 200 may reset and initialize the clock counter each time the next Vsync signal is output and restart the counting.

When the tail area or header area of the compressed video stream is received (Y in operation S1230), the receiving device 200 may calculate and store the clock counter value B corresponding to the output time of the next Vsync signal based on the frame refresh rate information included in the received tail area or header area (operation S1240). For example, when the tail area or header area of each compressed video packet included in the compressed video stream is received, the receiving device 200 may calculate and store the clock counter value B corresponding to the output time of the next Vsync signal based on the frame refresh rate information included in the received tail area or header area.

When the clock counter value A counted by the internal counter and the clock counter value B calculated based on the frame refresh rate information are the same (Y in operation S1250), the receiving device 200 may generate and output the next Vsync (operation S1260). For example, the receiving device 200 may compare the re-counted clock counter value A and the clock counter value B calculated based on the newly received compressed video packet every time the Vsync signal is output, and when the re-counted clock counter value A and the clock counter value B are the same, generate and output the next Vsync signal.

As shown in FIG. 12, the order of all operations is mapped for convenience of description, however, the order of operations that are unrelated to the order or may be performed in parallel is not necessarily limited to that order.

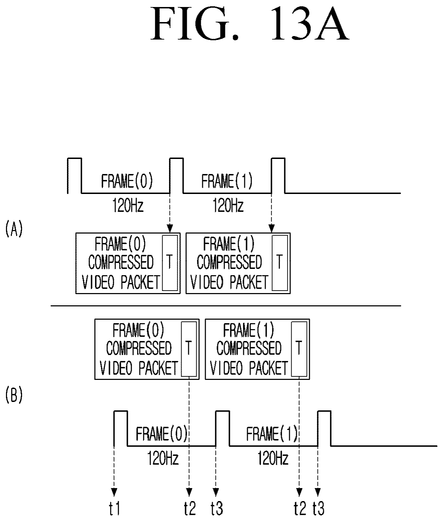

FIG. 13A is a diagram illustrating a method of restoring a Vsync signal based on information inserted into a tail area of a stream according to one or more embodiments.

In FIG. 13A, the upper area (A) may correspond to the operation of generating and transmitting the compressed video stream in the transmitting device 100, and the lower area (B) may correspond to the operation of receiving and processing the compressed video stream in the receiving device 200.

Referring to FIG. 13A, when the compressed video stream is received, the receiving device 200 may output the initial Vsync signal (time t1) and start the counting by operating the clock counter at the corresponding time. Next, the receiving device 200 may decode the compressed video packet corresponding to the first frame Frame(0) and start outputting the first frame Frame(0) to the screen. When the tail area of the compressed video packet corresponding to the first frame Frame(0) is received (time t2), the receiving device 200 may output the next Vsync signal based on the frame refresh rate information included in the corresponding tail area (time t3). For example, the tail area of the compressed video packet corresponding to the first frame Frame(0) may include the frame refresh rate information corresponding to the first frame Frame(0). For example, when the frame refresh rate information included in the corresponding tail area is 120 Hz, the receiving device 200 may output the Vsync signal corresponding to the second frame Frame(1) when the counting value of the clock counter becomes 1/120 seconds. The receiving device 200 may output the Vsync signals corresponding to the third to n-th frames Frame(2) to Frame(n) in the same manner, where n is a positive integer greater than zero (0).

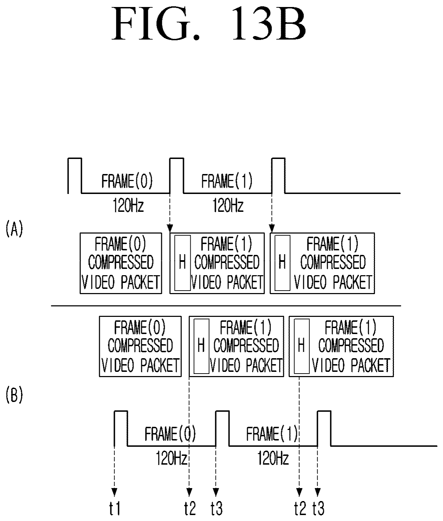

FIG. 13B is a diagram depicting a method of restoring a Vsync signal based on information inserted into a header area of a stream, according to one or more embodiments.

In FIG. 13B, the upper area (A) may correspond to the operation of generating and transmitting the compressed video stream in the transmitting device 100, and the lower area (B) may correspond to the operation of decoding and receiving the compressed video stream in the receiving device 200.

Referring to FIG. 13A, when the compressed video stream is received, the receiving device 200 may output the initial Vsync signal (time t1) and start the counting by operating the clock counter at the corresponding time. Next, the receiving device 200 may decode the compressed video packet corresponding to the first frame Frame(0) and start outputting the first frame Frame(0) to the screen. When the header area of the compressed video packet corresponding to the second frame Frame(1) is received (time t2), the receiving device 200 may output the next Vsync signal based on the frame refresh rate information included in the corresponding header area (time t3). For example, the header area of the compressed video packet corresponding to the second frame Frame(1) may include the frame refresh rate information corresponding to the first frame Frame(0). As another example, when the frame refresh rate information included in the corresponding header area is 120 Hz, the receiving device 200 may output the Vsync signal corresponding to the second frame Frame(1) when the counting value of the clock counter becomes 1/120 seconds. The receiving device 200 may output the Vsync signals corresponding to the third to n-th frames Frame(2) to Frame(n) in the same manner.

As described above, according to various embodiments, when the receiving end communicates with the transmitting end over the wireless network and receives the VRR video signal, even if the Vsync signal may not be received due to the wireless network communication, the frame generation refresh rate of the transmitting end and the output refresh rate of the receiving end may be synchronized with low delay. As a result, it may be possible to transmit and receive the VRR video signal in real time with low delay through the wireless network, thereby improving user convenience.

The methods according to various embodiments of the present disclosure described above may be implemented only by software upgrade or hardware upgrade of the existing electronic apparatus.

In addition, various embodiments of the present disclosure described above may be performed through an embedded server provided in the electronic apparatus and/or a server outside the electronic apparatus.

According to an embodiment of the present disclosure, the diverse embodiments described above may be implemented as software including instructions stored in a machine-readable storage medium (e.g., a computer-readable storage medium). A machine may be an apparatus that invokes the stored instruction from the storage medium and may be operated depending on the invoked instruction, and may include the electronic apparatus (e.g., the electronic apparatus 100) according to the disclosed embodiments. When a command is executed by the processor, the processor may directly perform a function corresponding to the command or other components may perform the function corresponding to the command under a control of the processor. The command may include codes created or executed by a compiler or an interpreter. The machine-readable storage medium may be provided in a form of a non-transitory storage medium. As used herein, the term 'non-transitory' may refer to the storage medium being tangible without including a signal, and may not distinguish whether data are semi-permanently or temporarily stored in the storage medium.

In addition, according to an embodiment of the present disclosure, the methods according to the diverse embodiments described above may be included and provided in a computer program product. The computer program product may be traded as a product between a seller and a purchaser. The computer program product may be distributed in the form of a storage medium (e.g., a compact disc read only memory (CD-ROM)) that may be read by the machine or online through an application store (e.g., PlayStore^{™}). In a case of the online distribution, at least portions of the computer program product may be at least temporarily stored in a storage medium such as a memory of a server of a manufacturer, a server of an application store, or a relay server or be temporarily created.

In addition, each of components (e.g., modules or programs) according to the diverse embodiments described above may include a single entity or a plurality of entities, and some of the corresponding sub-components described above may be omitted or other sub-components may be further included in the diverse embodiments. Alternatively or additionally, some of the components (e.g., the modules or the programs) may be integrated into one entity, and may perform functions performed by the respective corresponding components before being integrated in the same or similar manner. Operations performed by the modules, the programs, or other components according to the diverse embodiments may be executed in a sequential manner, a parallel manner, an iterative manner, or a heuristic manner, at least some of the operations may be performed in a different order or be omitted, or other operations may be added.

Although the present disclosure has been specifically illustrated and described with reference to the embodiments, it is to be understood that various changes in form and detail may be made without departing from the spirit and scope of the following claims.

## Claims

1. An electronic apparatus, comprising:
a communication interface configured to communicatively couple with a wireless network;
a memory storing one or more instructions; and
one or more processors communicatively coupled with the communication interface and the memory, and configured to control the electronic apparatus,
wherein the one or more processors are further configured to execute the one or more instructions to:
identify a frame refresh rate of a variable refresh rate (VRR) video signal;
acquire a compressed video stream corresponding to the VRR video signal by inserting information of the frame refresh rate into at least one of a tail area or a header area of a video stream; and
transmit, to an external device through the wireless network, the compressed video stream.

2. The electronic apparatus of claim 1, wherein the one or more processors are further configured to execute the one or more instructions to:
insert frame refresh rate information of a first video frame into at least one of:
a first tail area of a first compressed video packet of the compressed video stream corresponding to the first video frame; or
a first header area of a second compressed video packet of the compressed video stream corresponding to a second video frame,
wherein the second video frame is a next frame of the first video frame in the VRR video signal.

3. The electronic apparatus of claim 2, wherein the one or more processors are further configured to execute the one or more instructions to:
operate a clock counter based on a sync signal of the first video frame of the VRR video signal; and
identify the frame refresh rate of the first video frame based on a counting value of the clock counter.

4. The electronic apparatus of claim 1, wherein the one or more processors are further configured to execute the one or more instructions to:
receive, from an external source device through wired communication, the VRR video signal, and
wherein the VRR video signal comprises a vertical synchronization (Vsync) signal.

5. An electronic apparatus, comprising:
a communication interface configured to communicatively couple with a wireless network;
a memory storing one or more instructions; and
one or more processors communicatively coupled with the communication interface and the memory, and configured to control the electronic apparatus,
wherein the one or more processors are further configured to execute the one or more instructions to:
receive, through the communication interface, a compressed video stream corresponding to a variable refresh rate (VRR) video signal;
acquire frame refresh rate information comprised in at least one of a tail area or a header area of the compressed video stream; and
generate a first sync signal corresponding to a first video frame based on the frame refresh rate information.

6. The electronic apparatus of claim 5, wherein the one or more processors are further configured to execute the one or more instructions to:
generate, based on the compressed video stream, an initial sync signal and operate a clock counter; and
generate a second sync signal corresponding to a second video frame, based on a counting value of the clock counter and the frame refresh rate information of the first video frame acquired from the tail area of the compressed video stream, and
wherein the second video frame is a next video frame of the first video frame.

7. The electronic apparatus of claim 5, wherein the one or more processors are further configured to execute the one or more instructions to:
generate, based on the compressed video stream, an initial sync signal and operate a clock counter, and
generate a second sync signal corresponding to the first video frame based on a counting value of the clock counter and the frame refresh rate information of the first video frame acquired from the header area of the compressed video stream.

8. The electronic apparatus of claim 5, wherein the one or more processors are further configured to execute the one or more instructions to:
acquire respective frame refresh rate information comprised in tail areas of a plurality of compressed video packets comprised in the compressed video stream, and
wherein each of the tail areas of the plurality of compressed video packets comprises corresponding frame refresh rate information of video frames corresponding to each of the plurality of compressed video packets.

9. The electronic apparatus of claim 5, wherein the one or more processors are further configured to execute the one or more instructions to:
acquire respective frame refresh rate information comprised in header areas of a plurality of compressed video packets comprised in the compressed video stream, and
wherein each of the header areas of the plurality of compressed video packets comprises corresponding frame refresh rate information of a previous video frame of the plurality of compressed video packets.

10. The electronic apparatus of claim 5, further comprising:
a display,
wherein the one or more processors are further configured to execute the one or more instructions to:
output the first video frame based on a video signal restored from the compressed video stream and the first sync signal corresponding to the first video frame.

11. A method of controlling an electronic apparatus, comprising:
identifying a frame refresh rate of a variable refresh rate (VRR) video signal;
acquiring a compressed video stream corresponding to the VRR video signal by inserting information of the frame refresh rate into at least one of a tail area or a header area of a video stream; and
transmitting, to an external device through a wireless network, the compressed video stream.

12. The method of claim 11, wherein the acquiring of the compressed video stream comprises:
inserting frame refresh rate information of a first video frame into at least one of:
the tail area of a first compressed video packet corresponding to the first video frame; or
the header area of a second compressed video packet corresponding to a second video frame, and
wherein the second compressed video packet is a next frame of the first video frame.

13. The method of claim 12, wherein the acquiring of the compressed video stream comprises:
operating a clock counter based on a sync signal of the first video frame comprised in the VRR video signal; and
identifying the frame refresh rate of the first video frame based on a counting value of the clock counter.

14. A method of controlling an electronic apparatus, comprising:
receiving, through a wireless network, a compressed video stream corresponding to a variable refresh rate (VRR) video signal;
acquiring frame refresh rate information comprised in at least one of a tail area or a header area of the compressed video stream; and
generating a first sync signal corresponding to a first video frame based on the frame refresh rate information.

15. The method of claim 14, wherein the acquiring of the frame refresh rate information comprises:
based on the compressed video stream, generating an initial sync signal and operate a clock counter; and
obtaining the frame refresh rate information of the first video frame based on the frame refresh rate information of the first video frame comprised in the tail area of the compressed video stream,
wherein the generating of the first sync signal comprises:
generating a second sync signal corresponding to a second video frame, based on a counting value of the clock counter and frame refresh rate information of the first video frame, and
wherein the second video frame is a next video frame of the first video frame.
